# EUROPEAN PATENT APPLICATION

(11) **EP 2 913 093 A1**
(43) Date of publication of application: **02.09.2015**
(21) Application number: 14198409.6
(22) Date of filing: 17.12.2014
(51) Int. Cl.: B01D 67/00, B01D 69/10

(54) **Porous Polymeric Membrane With High Void Volume**

(30) Priority: 28.02.2014 US 201414194111
(71) Applicant: Pall Corporation, Port Washington, NY 11050 (US)
(72) Inventor: David, Yolando, Glen Cove, NY New York 11542 (US); Harton, Shane Edward, Port Washington, NY New York 11050 (US)
(74) Representative: Hoeger, Stellrecht & Partner Patentanwälte mbB

(57) **Abstract**

Membranes comprising a single layer having a first microporous surface; a second microporous surface; and, a porous bulk between the first microporous surface and the second microporous surface, wherein the bulk comprises a first set of pores having outer rims, prepared by removing introduced dissolvable silica nanoparticles, the first set of pores having a first controlled pore size, and a second set of pores connecting the outer rims of the first set of pores, the second set of pores having a second controlled pore size, and a polymer matrix supporting the first set of pores, wherein the first controlled pore size is greater than the second controlled pore size, filters including the membranes, and methods of making and using the membranes, are disclosed.

## Description

### BACKGROUND OF THE INVENTION

Polymeric membranes are used to filter a variety of fluids. However, there is a need for membranes that provide high throughput performance.

The present invention provides for ameliorating at least some of the disadvantages of the prior art. These and other advantages of the present invention will be apparent from the description as set forth below.

### BRIEF SUMMARY OF THE INVENTION

An embodiment of the invention provides a membrane, comprising a single layer having a first microporous surface; a second microporous surface; and, a porous bulk between the first microporous surface and the second microporous surface, wherein the bulk comprises a first set of pores having outer rims, prepared by removing introduced dissolvable silica nanoparticles, the first set of pores having a first controlled pore size, and a second set of pores connecting the outer rims of the first set of pores, the second set of pores having a second controlled pore size, and a polymer matrix supporting the first set of pores, wherein the first controlled pore size is greater than the second controlled pore size. In an embodiment, the second controlled pore size is in a ratio in the range of about 0.2 to about 0.4 times the first controlled pore size.

In accordance with other embodiments of the invention, filters and filter devices comprising the membranes, as well of methods of making and using the membranes, are provided.

### BRIEF DESCRIPTION OF THE SEVERAL VIEWS OF THE DRAWING(S)

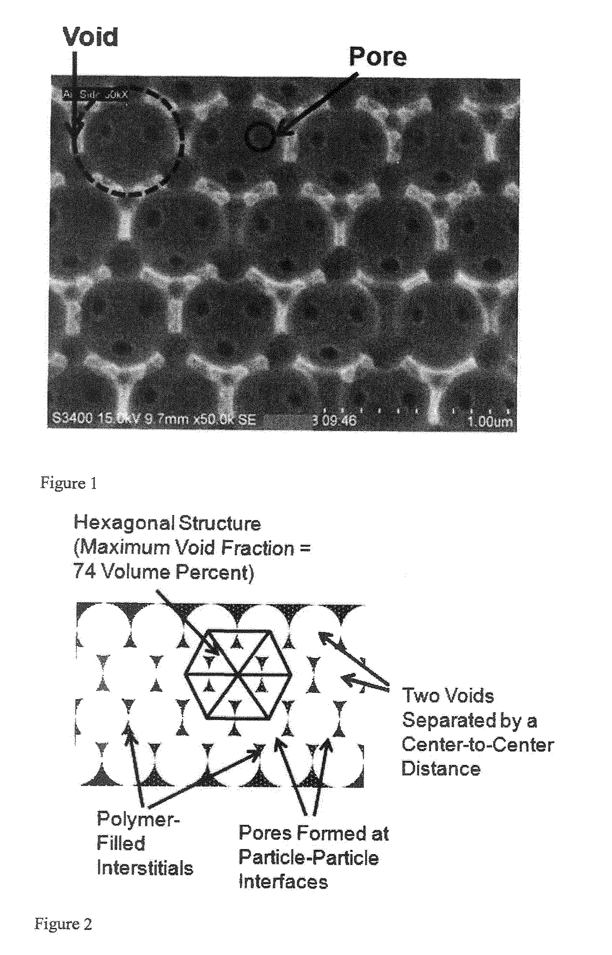

Figure 1 is a scanning electron micrograph (SEM) showing a surface view of an embodiment of a membrane according to the present invention, showing a first set of pores having connecting outer rims (one pore highlighted in dashed lines), and a second set of pores (one pore highlighted in solid line) located in the connecting outer rims of the first set of pores.
Figure 2 illustrates hexagonal packing of the first set of pores (formed by dissolving of particles) in a membrane according to an embodiment of the invention, wherein the hexagonal packing is 74 volume percent. Figure 2 also illustrates the matrix ("polymer formed interstitials") supporting the first set of pores, and the second set of pores connecting the outer rims of the first set of pores.

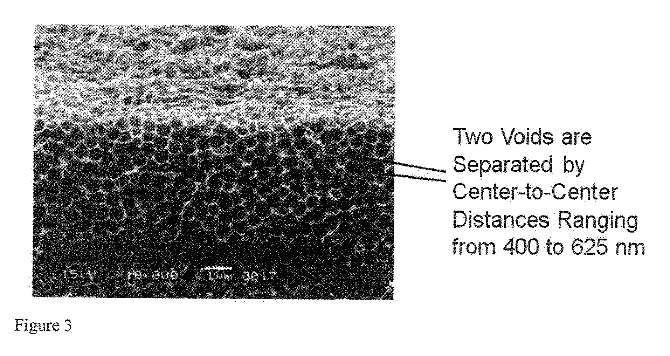

Figure 3 is an SEM showing a cross-sectional view of a membrane according to another embodiment of the present invention, also showing the center to center distances separating two pores in the first set of pores.

### DETAILED DESCRIPTION OF THE INVENTION

In accordance with an embodiment of the present invention, a membrane is provided, the membrane comprising a single layer having a first microporous surface; a second microporous surface; and, a porous bulk between the first microporous surface and the second microporous surface, wherein the bulk comprises a first set of pores having outer rims, prepared by removing introduced dissolvable silica nanoparticles, the first set of pores having a first controlled pore size, and a second set of pores connecting the outer rims of the first set of pores, the second set of pores having a second controlled pore size, and a polymer matrix supporting the first set of pores, wherein the first controlled pore size is greater than the second controlled pore size.

In accordance with an embodiment, the controlled pore size of the first set of pores is in the range of from about 50 nm to about 1000 nm, for example, from about 160 nm to about 630 nm. Thus, for example, the pore size of the first set of pores is about 160 nm, about 180 nm, about 200 nm, about 220 nm, about 240 nm, about 260 nm, about 280 nm, about 300 nm, about 320 nm, about 340 nm, about 360 nm, about 380 nm, about 400 nm, about 420 nm, about 440 nm, about 460 nm, about 480 nm, about 500 nm, about 520 nm, about 540 nm, about 560 nm, about 580 nm, about 600 nm, or about 620 nm.

In an embodiment, the second controlled pore size is in a ratio in the range of about 0.2 to about 0.4 times the first controlled pore size.

In an embodiment, the membrane is prepared by introducing dissolvable silica nanoparticles into solutions comprising one or more membrane forming polymers (typically, the membrane forming polymers are dissolved in a solvent or mixture of solvents), casting the nanoparticle-containing polymer solution (preferably, casting the nanoparticle-containing polymer solution on a substrate wherein the substrate has been pretreated with a preconditioning or releasing agent; more preferably, wherein the agent has been dried on the substrate before casting the solution thereon), carrying out phase inversion of the nanoparticle-containing polymer solution to provide a membrane, subsequently dissolving the nanoparticles, and washing the resultant membrane.

Advantageously, membranes according to the invention can be produced using preformed polymers such as polyethersulfone (PES), polyvinylidene fluoride (PVDF), and polyacrylonitrile (PAN), that are commonly used in commercial membranes. Additionally, the nanoparticles can be dissolved without using hydrofluoric acid, for example, the nanoparticles can be dissolved using safer, more environmentally benign solvents.

In other embodiments, filters and filter devices are provided, the filter and filter devices comprising at least one membrane.

A method of filtering fluid is also provided in accordance with another embodiment of the invention, the method comprising passing the fluid through at least one membrane, or a filter comprising at least one membrane, as described above.

In accordance with an embodiment of the invention, a method of preparing a membrane comprises (a) casting a solution comprising a dissolvable silica nanoparticle-containing polymer solution onto a substrate; (b) carrying out phase inversion of the nanoparticle-containing polymer solution to provide a membrane; (c) dissolving the nanoparticles and obtaining a nanoparticle-depleted membrane; and (d) washing the nanoparticle-depleted membrane.

Preferably (a) comprises casting the solution on a substrate pretreated with a preconditioning agent or a release agent. In some embodiments of the method, the preconditioning agent or the release agent is dried on the substrate before casting the solution on the pretreated substrate.

In some embodiments, (b) comprises exposing the nanoparticle-containing polymer solution to a temperature in the range of from about 40 °C to about 80 °C for a period in the range of from about 1 minute to about 2 hours. Alternatively, or additionally, in some embodiments, (b) comprises forming a film, and immersing the film in liquid to obtain the membrane.

As will be described in more detail below, dissolving the particles creates a first set of pores in the membranes, the first set of pores having outer rims, and located within the outer rims is a second set of pores. As illustrated in Figure 1, the dashed line highlights an outer rim of a pore in the first set, and the solid line highlights a pore in the second set. The second set of pores allows communication (e.g., fluid flow) from the void within one outer rim into the void of another outer rim.

A variety of dissolvable silica nanoparticles are suitable for use in preparing membranes according to embodiments of the invention. Preferably, the dissolvable particles are not pure silica. Typically, the particles comprise silica nanoparticles ranging in diameter from about 50 nm to about 1000 nm. In an embodiment, the particles comprise silica nanoparticles ranging in diameter from about 50 nm to about 1000 nm, having a density of 1.96g/cm³ or less. In some embodiments, the silica nanoparticles have a particle density of about 1.93 to about 1.96 g/cm³.

The silica nanoparticles can have a particle size, e.g., diameter, of less than 1000 nm, in particular a particle size of from about 160 nm to about 630 nm. Thus, for example, the nanoparticles have a particle size of about 160 nm, about 180 nm, about 200 nm, about 220 nm, about 240 nm, about 260 nm, about 280 nm, about 300 nm, about 320 nm, about 340 nm, about 360 nm, about 380 nm, about 400 nm, about 420 nm, about 440 nm, about 460 nm, about 480 nm, about 500 nm, about 520 nm, about 540 nm, about 560 nm, about 580 nm, about 600 nm, or about 620 nm.

The silica nanoparticles can be prepared by a method comprising: (a) reacting an orthosilicate and an alcohol or a mixture of alcohols in an aqueous medium in the presence of a salt of a metal of Group Ia or Group IIa, or in the presence of a metalloid compound, optionally in combination with ammonium hydroxide, (b) isolating the resulting nanoparticles, and (c) treating the nanoparticles from (b) with an acid.

In an embodiment, the nanoparticles can be included in the coating composition prior to the acid treatment (c).

In an embodiment, the orthosilicate used in the preparation of the nanoparticles is a tetraalkylorthosilicate. Examples of tetraalkylorthosilicates tetramethylorthosilicate, tetraethylorthosilicate, tetrapropylorthosilicate, tetrabutylorthosilicate, and tetrapentylorthosilicate.

Any suitable alcohol or mixture of alcohols can be used in the preparation of the nanoparticles, for example, the alcohol or mixture of alcohols is selected from methanol, ethanol, propanol, butanol, and mixtures thereof.

The salt of the metal used in the preparation of the nanoparticles can be selected from salts of lithium, sodium, potassium, cesium, magnesium, and calcium. In an embodiment, the salt of the metal is selected from lithium acetate, sodium acetate, sodium metasilicate, sodium formate, potassium acetate, cesium acetate, magnesium acetate, and calcium acetate. In another embodiment, the metalloid compound is a compound of boron, for example, boric acid or a boric acid ester such as alkyl borate. The alkyl borate can be a trialkyl borate such as trimethyl borate or triethyl borate.

The acid employed in (c) of the method above can be a mineral acid or organic acid. Examples of mineral acids include hydrochloric acid, sulfuric acid, and nitric acid, preferably hydrochloric acid or sulfuric acid. Examples of organic acids include acetic acid, formic acid, trifluoroacetic acid, trichloroacetic acid, and p-toluenesulfonic acid, preferably formic acid. The nanoparticles isolated in (b) can be treated with a 1N to 2N acid, e.g., 1N HCl, or 10-50% weight % organic acid in water, e.g., 50% aqueous formic acid, for a period of about 0.5 hr to about 3 hr, preferably about 1 hr to 2 hr. For example, the nanoparticles can be sonicated in an acid bath for the above period. Following the acid treatment, the nanoparticles are isolated from the acid and washed with deionized water and dried under vacuum to obtain the silica nanoparticles.

Illustratively, silica nanoparticles can be prepared as follows. In a 6 L jacketed flask kept at 25 °C, 4.8 g lithium acetate dihydrate (LiOAc. 2H₂O), 2480 mL deionized water (DI-H₂O), 2.9 L anhydrous ethanol (EtOH), and 120 mL 28% w/w NH₃ in water is stirred for 30 min at 200 rpm using an overhead mixer with PTFE impellers. A solution of 300 mL EtOH with 200 mL tetraethylorthosilicate (TEOS), which is prepared under dry conditions (< 10% relative humidity), is rapidly poured into the 6 L flask, and mixing is increased to 400 rpm and a dry air purge (< 1% relative humidity) is utilized for 5 min. Mixing is reduced to 200 rpm, the dry air purge is removed, the flask is sealed, and the reaction continues for a total of 1 h. The particles are purified by centrifugation and re-suspension in EtOH three times.

Typical stock solutions comprising the dissolvable nanoparticles, preferably purified dissolvable nanoparticles, comprise the nanoparticles dispersed at concentrations in the range of from about 30 wt% to about 65 wt% dimethyl formamide (DMF), with in the range of from about 0.001% to about 0.1% triethanolamine (TEA).

A variety of procedures are suitable for dissolving the particles. As noted above, the process should avoid using hydrofluoric acid; rather, the nanoparticles can be, and should be, dissolved using safer, more environmentally benign solvents. For example, the nanoparticle-containing membrane can be placed in a mineral acid (e.g., HCl or H₂SO₄) at a concentration in the range of about 0.1 to about 2 moles/L for a period in the range of from about 1 minute to about 1 hour, followed by immersion in an alkaline solution (e.g., KOH or NaOH) at a concentration in the range of about 0.1 to about 4 moles/L for a period in the range of from about 30 minutes to about 24 hours, followed by washing in water (e.g., DI water) for a period in the range of about 30 minutes to about 4 hours. If desired, the membrane can subsequently be dried, e.g., in an oven at a temperature in the range of from about 40 °C to about 80 °C for a period in the range of about 30 minutes to about 2 hours.

Typically, the phase inversion process for producing the membrane from the nanoparticle-containing polymer solution involves casting or extruding a polymer solution into a thin film on the substrate, and precipitating the polymer(s) through one or more of the following: (a) evaporation of the solvent and nonsolvent, (b) exposure to a non-solvent vapor, such as water vapor, which absorbs on the exposed surface, (c) quenching in a non-solvent liquid (e.g., a phase immersion bath containing water, and/or another non-solvent or solvent), and (d) thermally quenching a hot film so that the solubility of the polymer is suddenly greatly reduced. Phase inversion can be induced by the wet process (immersion precipitation), vapor induced phase separation (VIPS), thermally induced phase separation (TIPS), quenching, dry-wet casting, and solvent evaporation (dry casting). Dry phase inversion differs from the wet or dry-wet procedure by the absence of immersion coagulation. In these techniques, an initially homogeneous polymer solution becomes thermodynamically unstable due to different external effects, and induces phase separation into a polymer lean phase and a polymer rich phase. The polymer rich phase forms the matrix of the membrane, and the polymer lean phase, having increased levels of solvents and non-solvents, forms pores.

A membrane-forming polymer solution is prepared by dissolving the polymer in a solvent or a mixture of solvents. A variety of polymer solutions are suitable for use in the invention, and are known in the art. Suitable polymer solutions can include, polymers such as, for example, polyaromatics; sulfones (e.g., polysulfones, including aromatic polysulfones such as, for example, polyethersulfone (PES), polyether ether sulfone, bisphenol A polysulfone, polyarylsulfone, and polyphenylsulfone), polyamides, polyimides, polyvinylidene halides (including polyvinylidene fluoride (PVDF)), polyolefins, such as polypropylene and polymethylpentene, polyesters, polystyrenes, polycarbonates, polyacrylonitriles ((PANs) including polyalkylacrylonitriles), cellulosic polymers (such as cellulose acetates and cellulose nitrates), fluoropolymers, and polyetherether ketone (PEEK). Polymer solutions can include a mixture of polymers, e.g., a hydrophobic polymer (e.g., a sulfone polymer) and a hydrophilic polymer (e.g., polyvinylpyrrolidone (PVP)).

In addition to one or more polymers, typical polymer solutions comprise at least one solvent, and may further comprise at least one non-solvent. Suitable solvents include, for example, dimethyl formamide (DMF); N,N-dimethylacetamide (DMAC); N-methyl pyrrolidone (NMP); dimethyl sulfoxide (DMSO), methyl sulfoxide, tetramethylurea; dioxane; diethyl succinate; chloroform; and tetrachloroethane; and mixtures thereof. Suitable nonsolvents include, for example, water; various polyethylene glycols (PEGs; e.g., PEG-200, PEG-300, PEG-400, PEG-1000); various polypropylene glycols; various alcohols, e.g., methanol, ethanol, isopropyl alcohol (IPA), amyl alcohols, hexanols, heptanols, and octanols; alkanes, such as hexane, propane, nitropropane, heptanes, and octane; and ketone, ethers and esters such as acetone, butyl ether, ethyl acetate, and amyl acetate; acids, such as acetic acid, citric acid, and lactic acid; and various salts, such as calcium chloride, magnesium chloride, and lithium chloride; and mixtures thereof.

If desired, a solution comprising a polymer can further comprise, for example, one or more polymerization initiators (e.g., any one or more of peroxides, ammonium persulfate, aliphatic azo compounds (e.g., 2,2'-azobis(2-amidinopropane) dihydrochloride (V50)), and combinations thereof), and/or minor ingredients such as surfactants and/or release agents.

Typical stock solutions including a polymer (before combining with a solution comprising the dissolvable nanoparticles) comprise in the range of from about 10 wt% to about 35 wt% resin (e.g., PES, PVDF, or PAN), in the range of from about 0 to about 10 wt% PVP, in the range of from about 0 to about 10 wt% PEG, in the range of from about 0 to about 90 wt% NMP, in the range of from about 0 to about 90 wt% DMF, and in the range of from about 0 to about 90 wt% DMAC.

Suitable components of solutions are known in the art. Illustrative solutions comprising polymers, and illustrative solvents and nonsolvents include those disclosed in, for example, U.S. Patents 4,340,579; 4,629,563; 4,900,449; 4,964,990, 5,444,097; 5,846,422; 5,906,742; 5,928,774; 6,045,899; 6,146,747; and 7,208,200.

While a variety of polymeric membranes can be produced in accordance with the invention, in preferred embodiments, the membranes are sulfone membranes (more preferably, polyethersulfone membranes and/or polyarylsulfone membranes), acrylic membranes (e.g., (PANs, including polyalkylacrylonitriles), or semi-crystalline membranes (for example, PVDF membranes and/or polyamide membranes).

The membranes can be cast manually (e.g., poured, cast, or spread by hand onto the substrate) or automatically (e.g., poured or otherwise cast onto a moving bed having the substrate thereon).

A variety of casting techniques, including multiple casting techniques, are known in the art and are suitable. A variety of devices known in the art can be used for casting. Suitable devices include, for example, mechanical spreaders, that comprise spreading knives, doctor blades, or spray/pressurized systems. One example of a spreading device is an extrusion die or slot coater, comprising a casting chamber into which the casting formulation (solution comprising a polymer) can be introduced and forced out under pressure through a narrow slot. Illustratively, the solutions comprising polymers can be cast by means of a doctor blade with knife gaps in the range from about 100 micrometers to about 500 micrometers, more typically in the range from about 120 micrometers to about 400 micrometers.

A variety of casting speeds are suitable as is known in the art. Typically, the casting speed is at least about 3 feet per minute (fpm), more typically in the range of from about 3 to about 40 fpm, in some embodiments, at least about 5 fpm.

A variety of substrates are suitable for preparing membranes according to embodiments of the invention. Preferably, the substrate is a non-paper substrate. Suitable substrates include, for example, glass, a polyester such as polyethylene terephthalate (PET) (e.g., commercially available as MYLAR); polypropylene; polyethylene (including polyethylene naphthalate (PEN); polyethylene terephthalate glycol (PETG)); polyimide; polyphenylene oxide; nylon; and acrylics.

In some embodiments, the substrate has been pretreated with a preconditioning agent or release agent, preferably, wherein the agent is dried before the particle-containing polymer solution is cast on the pretreated substrate. Without being bound to any particular theory, it is believed that, with respect to some substrates and/or polymers, the use of a preconditioning or release agent improves efficiency in separating the dissolvable particle-containing membrane from the substrate, before dissolving the particles.

Preferably, the preconditioning or release agent does not dissolve in solvents used in the casting formulation, is compatible with membrane processing temperatures, sufficiently adheres to the cast film during thermal processing that it does not delaminate, and dissolves readily in solvents that do not dissolve the membrane resin (such that the membrane can be released from the substrate). Examples of suitable preconditioning or release agents include polyvinyl alcohol (PVOH), polyvinylpyrrolidone (PVP), poly(acrylic acid), and poly(methacrylic acid).

Illustratively, a PVOH stock solution can be prepared with about 5 wt% to about 15 wt% PVOH in deionized water, and cast on a substrate using a casting bar with a gap in the range of from about 1 to about 10 mil, and dried in an oven at a temperature in the range of from about 40 °C to about 80 °C for a period in the range of from about 1 minute to about 2 hours.

The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid.

Additionally, the membranes have a desirable hexagonal structure resulting from the first set of pores in the bulk of the membrane. As illustrated in Figure 2 (showing the first set of pores resulting from dissolving the introduced particles and the hexagonal structure representing the maximum void fraction), the maximum void fraction is 74 volume percent, and membranes according to embodiments of the invention have in the range of from about 66% to about 73% void fraction.

The microporous surfaces of the membranes can have any suitable mean pore size, e.g., as determined by, for example, calculating the average surface pore size from an SEM at 5,000X or 20,000X magnification.

Typically, the thickness of membranes according to embodiments of the invention is in the range of about 0.5 mils to about 6.5 mils, preferably, in the range of from about 1 mils to about 3 mils.

The membrane can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. Typically, the membrane has a CWST of greater than about 70 dynes/cm (about 70 x 10⁻⁵ N/cm), more typically greater than about 73 dynes/cm (about 73 x 10⁻⁵ N/cm), and can have a CWST of about 78 dynes/cm (about 78 x 10⁻⁵ N/cm) or more. In some embodiments, the membrane has a CWST of about 82 dynes/cm (about 82 x 10⁻⁵ N/cm) or more.

The surface characteristics of the membrane can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface. Grafting reactions may be activated by exposure to an energy source such as gas plasma, vapor plasma, corona discharge, heat, a Van de Graff generator, ultraviolet light, electron beam, or to various other forms of radiation, or by surface etching or deposition using a plasma treatment.

A variety of fluids can be filtered in accordance with embodiments of the invention. Membranes according to embodiments of the invention can be used in a variety of applications, including, for example, diagnostic applications (including, for example, sample preparation and/or diagnostic lateral flow devices), ink jet applications, filtering fluids for the pharmaceutical industry, filtering fluids for medical applications (including for home and/or for patient use, e.g., intravenous applications, also including, for example, filtering biological fluids such as blood (e.g., to remove leukocytes)), filtering fluids for the electronics industry (e.g., filtering photoresist fluids in the microelectronics industry), filtering fluids for the food and beverage industry, clarification, filtering antibody- and/or protein-containing fluids, filtering nucleic acid-containing fluids, cell detection (including *in situ*), cell harvesting, and/or filtering cell culture fluids. Alternatively, or additionally, membranes according to embodiments of the invention can be used to filter air and/or gas and/or can be used for venting applications (e.g., allowing air and/or gas, but not liquid, to pass therethrough). Membranes according to embodiments of the inventions can be used in a variety of devices, including surgical devices and products, such as, for example, ophthalmic surgical products.

In accordance with embodiments of the invention, the membrane can have a variety of configurations, including planar, pleated, and/or hollow cylindrical.

Membranes according to embodiments of the invention are typically disposed in a housing comprising at least one inlet and at least one outlet and defining at least one fluid flow path between the inlet and the outlet, wherein at least one inventive membrane or a filter including at least one inventive membrane is across the fluid flow path, to provide a filter device or filter module. In an embodiment, a filter device is provided comprising a housing comprising an inlet and a first outlet, and defining a first fluid flow path between the inlet and the first outlet; and at least one inventive membrane or a filter comprising at least one inventive membrane, the inventive membrane or filter comprising at least one inventive membrane being disposed in the housing across the first fluid flow path.

Preferably, for crossflow applications, at least one inventive membrane or filter comprising at least one inventive membrane is disposed in a housing comprising at least one inlet and at least two outlets and defining at least a first fluid flow path between the inlet and the first outlet, and a second fluid flow path between the inlet and the second outlet, wherein the inventive membrane or filter comprising at least one inventive membrane is across the first fluid flow path, to provide a filter device or filter module. In an illustrative embodiment, the filter device comprises a crossflow filter module, the housing comprising an inlet, a first outlet comprising a concentrate outlet, and a second outlet comprising a permeate outlet, and defining a first fluid flow path between the inlet and the first outlet, and a second fluid flow path between the inlet and the second outlet, wherein at least one inventive membrane or filter comprising at least one inventive membrane is disposed across the first fluid flow path.

The filter device or module may be sterilizable. Any housing of suitable shape and providing an inlet and one or more outlets may be employed.

The housing can be fabricated from any suitable rigid impervious material, including any impervious thermoplastic material, which is compatible with the fluid being processed. For example, the housing can be fabricated from a metal, such as stainless steel, or from a polymer, e.g., transparent or translucent polymer, such as an acrylic, polypropylene, polystyrene, or a polycarbonated resin.

The following examples further illustrate the invention but, of course, should not be construed as in any way limiting its scope.

### EXAMPLE 1

This example demonstrates the preparation of a membrane according to an embodiment of the invention, comprising a single layer having a first microporous surface; a second microporous surface; and, a porous bulk between the first microporous surface and the second microporous surface, wherein the bulk comprises a first set of pores having outer rims, prepared by removing introduced dissolvable silica nanoparticles, the first set of pores having a first controlled pore size of about 570 nm, and a second set of pores connecting the outer rims of the first set of pores, the second set of pores having a second controlled pore size of about 171 nm, and a polymer matrix supporting the first set of pores.

Dissolvable nanoparticles are prepared in stock solution as follows: In a jacketed flask kept at 25 °C, a solution is prepared consisting of 1 mol/L ammonia (NH₃), 8.24 mol/L ethanol (ETOH), 1 mol/L methanol (MeOH), 23.7 mol/L deionized (DI) water, 0.15 mol/L tetraethoxysilane (TEOS), and 0.0078 mol/L sodium metasilicate (Na₂SiO₃), and stirred at 200 rpm for 1 hr. Dynamic light scattering and SEM show particle diameters of approximately 570 nm. Particles are centrifuged, decanted, and re-suspended in ETOH twice. Then, the particles are centrifuged, decanted, and re-suspended in DMF along with 0.1 % triethanolamine (TEA) three times. The stock solution has a final concentration of 63 % (w/w) particles.

The polymer (resin) stock solution is prepared as follows: In a jacketed kettle kept at 40 °C using a circulating bath, 30% (w/w) PES resin (BASF, Ultrason E 6020 P), 15% (w/w) NMP, and 55% (w/w) DMF are mixed at 800 rpm using an overhead mixer for 4 hr. The solution is placed under vacuum at 200 mbar for 30 minutes to deaerate the solution.

Polyvinyl Alcohol (PVOH) stock solution is prepared as follows: In a jacketed kettle kept at 90 °C, a solution is prepared by combining 10% w/w PVOH (96% Hydrolyzed, Scientific Polymer Products) with 90% DI water and stirring at 200 rpm for 16 hr.

The casting solution is prepared as follows: The resin stock solution and the particle stock solution are combined in a flask along with PVP K90 and PEG-1000 and mixed at 30,000 rpm for 2 min with final concentrations of 40% (w/w) particles, 11% PES, 6% NMP, 42% DMF, 0.5% PEG-1000, and 0.5% PVP K90, followed by deaeration at 200 mbar for 30 min.

Using a casting bar gapped to 5 mil, PVOH stock solution is cast onto a glass plate and placed in an oven at 80 °C for 2 hr. to form a film. Subsequently, the casting solution is cast onto the PVOH film using a 3 mil gapped casting bar and placed in an oven for 15 min at 60 °C followed by immersion in water at 80 °C for 1 hr. to release the membrane from the coated substrate. The membrane is soaked in 1 mol/L HCl for 30 min., then 2 mol/L KOH for 18 hr. The membrane is subsequently washed with water at 25 °C for 2 hr and dried at 70 °C for 30 min. An SEM image of the cross-section is shown in Figure 3. Fourier analysis of the two-dimensional SEM image shows void-void separation distances ranging from 400 to 625 nm.

Using SEM analysis and porometry, the second set of pores, that are located in the connections between the outer rims of the first set of pores, have a pore size of about 171 nm.

### EXAMPLE 2

This example demonstrates the preparation of a membrane according to another embodiment of the invention.

Dissolvable nanoparticles are prepared in stock solution as follows: In a jacketed flask kept at 25 °C, a solution is prepared consisting of 0.9 mol/L NH₃, 9.16 mol/L ETOH, 23.07 mol/L DI water, 0.15 mol/L TEOS, and 0.0078 mol/L lithium acetate (CH₃COOLi), and stirred at 200 rpm for 1 hr. Dynamic light scattering and SEM show particle diameters of approximately 310 nm. Particles are centrifuged, decanted, and re-suspended in ETOH twice. Then, the particles are centrifuged, decanted, and re-suspended in DMF along with 0.1 % TEA three times. The stock solution has a final concentration of 55 % (w/w) particles.

The polymer stock solution and the PVOH stock solution are prepared as described in Example 1.

The casting solution is prepared as follows: The resin stock solution and the particle stock solution are combined in a flask along with PVP K90 and PEG-1000 and mixed at 30,000 rpm for 2 min with final concentrations of 42% (w/w) particles, 11% PES, 5% NMP, 41% DMF, 0.5% PVP K90, and 0.5% PEG-1000, followed by deaeration at 200 mbar for 30 min.

Using a casting bar gapped to 5 mil, PVOH stock solution is cast onto a glass plate and placed in an oven at 80 °C for 2 hr., to form a film. Subsequently, the casting solution is cast onto the PVOH film using a 3 mil gapped casting bar and placed in an oven for 15 min at 60 °C, followed by immersion in water at 80 °C for 1 hr. The membrane is soaked in 1 mol/L HCl for 30 min., then 2 mol/L KOH for 18 hr. The membrane is subsequently washed with water at 25 °C for 2 hr and dried at 70 °C for 30 min. Fourier analysis of the two-dimensional SEM image shows void-void separation distances ranging from 225 to 325 nm.

Using SEM analysis and porometry, the second set of pores, that are located in the connections between the outer rims of the first set of pores, have a pore size of about 93 nm.

### EXAMPLE 3

This example demonstrates the preparation of a membrane according to another embodiment of the invention.

Dissolvable nanoparticles are prepared in stock solution as follows: In a jacketed flask kept at 25 °C, a solution is prepared consisting of 0.3 mol/L NH₃, 9.16 mol/L ETOH, 23.74 mol/L DI water, 0.15 mol/L TEOS, and 0.0078 mol/L CH₃COOLi, and stirred at 200 rpm for 1 hr. Dynamic light scattering and SEM show particle diameters of approximately 160 nm. Particles are centrifuged, decanted, and re-suspended in ETOH twice. Then, the particles are centrifuged, decanted, and re-suspended in DMF along with 0.1% TEA three times. The stock solution has a final concentration of 55% (w/w) particles.

The polymer stock solution and the PVOH stock solution are prepared as described in Example 1.

The casting solution is prepared as follows: The resin stock solution and the particle stock solution are combined in a flask along with PVP K90 and PEG-1000 and mixed at 30,000 rpm for 2 min with final concentrations of 42% (w/w) particles, 11% PES, 5% NMP, 41% DMF, 0.5% PVP K90, and 0.5% PEG-1000, followed by deaeration at 200 mbar for 30 min.

Using a casting bar gapped to 5 mil, PVOH stock solution is cast onto a glass plate and placed in an oven at 80 °C for 2 hr. to form a film. Subsequently, the casting solution is cast onto the PVOH film using a 3 mil gapped casting bar and placed in an oven for 15 min at 60 °C, followed by immersion in water at 80 °C for 1 hr. The membrane is soaked in 1 mol/L HCl for 30 min., then 2 mol/L KOH for 18 hr. The membrane is subsequently washed with water at 25 °C for 2 hr and dried at 70 °C for 30 min. Fourier analysis of the two-dimensional SEM image shows void-void separation distances ranging from 125 to 200 nm.

Using SEM analysis and porometry, the second set of pores, that are located in the connections between the outer rims of the first set of pores, have a pore size of about 48 nm.

### EXAMPLE 4

This example demonstrates the preparation of a membrane according to another embodiment of the invention.

Dissolvable nanoparticles are prepared in stock solution as described in Example 1, and dynamic light scattering and SEM show particle diameters of approximately 570 nm.

The polymer stock solution is prepared as follows: In a jacketed kettle kept at 50 °C using a circulating bath, 17% (w/w) PAN resin (Scientific Polymer Products), 0.3% PVP K30, and 82.5% DMF are mixed at 100 rpm using an overhead mixer for 5 hr. The solution is placed under vacuum at 200 mbar for 30 min. to deaerate the solution.

The PVOH stock solution is prepared as described in Example 1.

The casting solution is prepared as follows: The resin stock solution and the particle stock solution are combined in a flask and mixed at 30,000 rpm for 2 min with final concentrations of 30% (w/w) particles, 9% PAN, <0.1% PVP, and 61% DMF, followed by deaeration at 200 mbar for 30 min.

Using a casting bar gapped to 5 mil, PVOH stock solution is cast onto a glass plate and placed in an oven at 80 °C for 2 hr. to form a film. Subsequently, the casting solution is cast onto the PVOH film using a 3 mil gapped casting bar and placed in an oven for 20 min at 70 °C, followed by immersion in water at 60 °C for 15 min. The membrane is soaked in 1 mol/L HCl for 30 min., then 0.5 mol/L KOH for 18 hr. The membrane is subsequently washed with water at 25 °C for 2 hr and dried at 70 °C for 30 min. Fourier analysis of the two-dimensional SEM image shows void-void separation distances ranging from 375 to 550 nm.

Using SEM analysis and porometry, the second set of pores, that are located in the connections between the outer rims of the first set of pores, have a pore size of about 171 nm.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A microporous membrane comprising
(a) a single layer having
(i) a first microporous surface;
(ii) a second microporous surface; and,
(iii) a porous bulk between the first microporous surface and the second microporous surface, wherein the bulk comprises a first set of pores having outer rims, prepared by removing introduced dissolvable silica nanoparticles, the first set of pores having a first controlled pore size, and a second set of pores connecting the outer rims of the first set of pores, the second set of pores having a second controlled pore size, and a polymer matrix supporting the first set of pores, wherein the first controlled pore size is greater than the second controlled pore size.

2. The microporous membrane according to claim 1, wherein the first set of controlled pore size is in the range of from about 50 nm to about 1000 nm.

3. The microporous membrane of claim 1 or 2, wherein the second controlled pore size is in a ratio in the range of about 0.2 to about 0.4 times the first controlled pore size.

4. A method of making a membrane, the method comprising:
(a) casting a solution comprising a dissolvable silica nanoparticle-containing polymer solution onto a substrate;
(b) carrying out phase inversion of the nanoparticle-containing polymer solution to provide a membrane;
(c) dissolving the nanoparticles and obtaining a nanoparticle-depleted membrane; and
(d) washing the nanoparticle-depleted membrane.

5. The method of claim 4, wherein (a) comprises casting the solution on a substrate pretreated with a preconditioning agent or a release agent.

6. The method of claim 5, wherein the preconditioning agent or the release agent is dried on the substrate before casting the solution on the pretreated substrate.

7. The method of any one of claims 4-6, wherein (b) comprises exposing the nanoparticle-containing polymer solution to a temperature in the range of from about 40 °C to about 80 °C for a period in the range of from about 1 minute to about 2 hours.

8. The method of any one of claims 4-6, wherein (b) comprises forming a film, and immersing the film in liquid to obtain the membrane.

9. A method of filtering a fluid, the method comprising passing the fluid through the membrane of any one of claims 1-3.
